# EUROPÄISCHE PATENTANMELDUNG

(11) **EP 1 772 622 A1**
(43) Veröffentlichungstag der Anmeldung: **11.04.2007**
(21) Anmeldenummer: 06020891.5
(22) Anmeldetag: 05.10.2006
(51) Int. Cl.: F03D 7/02, F03D 7/04

(54) **Verfahren zum Betreiben einer Windenergieanlage**

(30) Priorität: 10.10.2005 DE 102005048805
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Verfahren zum Betreiben einer Windenergieanlage (10), wobei die Windenergieanlage (10) einen von Wind antreibbaren Rotor (18) aufweist mit zumindest einem Rotorblatt (22), einen Generator zur Umwandlung der mechanischen Energie des Rotors (18) in elektrische Energie sowie einen Turm (14), an dem der Rotor (18) angeordnet ist. Im Betrieb der Windenergieanlage (10) wird mittels einer geeigneten Messeinrichtung wenigstens eine Messgröße vorzugsweise mehrfach gemessen, die ein Maß für die Biegung des Rotorblattes (22) in Turmrichtung aufgrund einer gegebenen Windlast ist und damit ein Maß für die Kollisionsgefahr des Rotorblattes (22) mit dem Turm (14) der Windenergieanlage (10) während eines Turmdurchgangs, wobei abhängig von dieser Messgröße zur Bestimmung der Rotorblattbiegung zumindest ein Betriebsparameter der Windenergieanlage (10) eingestellt wird.

## Beschreibung

Die vorliegende Erfindung betrifft ein Verfahren zum Betreiben einer Windenergieanlage, wobei die Windenergieanlage einen von Wind antreibbaren Rotor aufweist mit zumindest einem Rotorblatt, einen Generator zur Umwandlung der mechanischen Energie des Rotors in elektrische Energie sowie einen Turm, an dem der Rotor angeordnet ist. Die Erfindung betrifft des Weiteren eine Windenergieanlage zur Durchführung des Verfahrens.

Bei Windenergieanlagen, bei denen sich der Rotor sowie die Rotorblätter um eine zumindest annähernd horizontale Achse drehen, wobei der Rotor an dem oberen Ende des Turms gelagert ist, überstreichen die Rotorblätter im Betrieb jeweils nacheinander den Bereich des Turms. Während des Betriebs, d.h. während sich die Rotorblätter drehen, kommt es häufig auf Grund starker Windlast zu (Durch-)Biegungen der Rotorblätter in Richtung des Turms. Je höher die Geschwindigkeit des Windes ist, der auf die Rotorblätter trifft und diese antreibt, desto stärker sind die zu beobachtenden Biegungen der Rotorblätter. Ein anderer Einflussfaktor für die Stärke der Biegebewegungen ist naturgemäß die Länge der einzelnen Rotorblätter. Je länger einer Rotorblatt ist, desto stärker wird die Biegung sein. Da die Tendenz im Windenergieanlagenbau dahin geht, immer größere Windenergieanlagen mit immer längeren Rotorblättern zu konstruieren, wird sich die Stärke der Durchbiegungen immer weiter erhöhen.

Im Extremfall biegen sich die Rotorblätter schon bei den heute eingesetzten Windenergieanlagen so stark durch, dass eine Berührung zwischen dem den Turmbereich überstreichenden Rotorblatt und dem Turm die Folge sein kann. Eine Turmberührung führt dabei üblicherweise mindestens zu gravierenden Schäden an dem Rotorblatt, eventuell auch an dem Turm. Um derartige Schäden zu vermeiden, ist es im Stand der Technik zum einen bekannt, die Rotorachse gegenüber der Horizontalen leicht nach oben zu neigen, so dass der Abstand zwischen Rotorblatt und Turm während des Turmdurchgangs vergrößert wird. Zum anderen ist es bekannt, die Rotorblätter nach der Herstellung derselben etwas entgegen der Turmrichtung zu verbiegen, um einer späteren Windlastbiegung entgegenzuwirken. Trotz dieser Maßnahmen kam es in der Vergangenheit weiterhin zu Turmberührungen der Rotorblätter, insbesondere der Rotorblattspitzen, mit den beschriebenen Auswirkungen.

Aufgabe der vorliegenden Erfindung ist es daher, ein Verfahren zum Betreiben einer Windenergieanlage anzugeben, durch das Turmberührungen der Rotorblätter wirksam verhindert werden können. Weiter ist es Aufgabe der Erfindung, eine Windenergieanlage anzugeben, die gemäß diesem Verfahren arbeitet.

Diese Aufgabe wird gelöst durch die Merkmale des Patentanspruches 1. Demgemäß zeichnet sich das eingangs genannte Verfahren zum Betreiben einer Windenergieanlage dadurch aus, dass im Betrieb der Windenergieanlage mittels einer geeigneten Messeinrichtung wenigstens eine Messgröße, vorzugsweise mehrfach, besonders bevorzugt kontinuierlich, gemessen wird, die ein Maß für die Biegung des Rotorblattes in Turmrichtung auf Grund einer gegebenen Windlast ist und damit ein Maß für die Kollisionsgefahr des Rotorblattes mit dem Turm der Windenergieanlage während eines Turmdurchgangs, wobei abhängig von dieser Messgröße zur Bestimmung der Rotorblattbiegung zumindest ein Betriebsparameter der Windenergieanlage eingestellt wird.

Als einstellbare Betriebsparameter der Windenergieanlage werden im Rahmen dieser Anmeldung sämtliche denkbaren Parameter verstanden, die bei einer Windenergieanlage eingestellt werden können, wie etwa die Parameter von Bremsleistungen bzw. Bremsvorgängen, die Windanstellwinkel der Rotorblätter, die Leistungsabgabe der Windenergieanlage, bestimmte Betriebszustände wie Ein- und Ausschaltzustände und dergleichen sowie einstellbare Parameter von der Windenergieanlage direkt oder indirekt zugeordneten Einrichtungen.

Besonders bevorzugt werden abhängig von der Messgröße zur Bestimmung der Rotorblattbiegung allerdings der oder die Windanstellwinkel eines oder mehrerer Rotorblätter der Windenergieanlage eingestellt. Bei einem Wert der Messgröße, der einer großen Rotorblattbiegung aufgrund starker Windlast entspricht, können ein oder mehrere Rotorblätter gegenüber einer gegebenen Stellung teilweise oder ganz aus dem Wind gedreht werden, um die Windlast zu verringern, die auf die Rotorblätter wirkt. In Folge dessen wird der jeweilige Abstand zwischen Rotorblatt und Turm während eines Turmdurchganges des Rotorblattes verringert. Entsprechend können die Rotorblätter stärker in den Wind gedreht werden, wenn die Windlast geringer wird. Unter Turmdurchgang wird im Rahmen dieser Anmeldung eine Teilbewegung der Gesamtrotation eines Rotorblattes verstanden, nämlich diejenige, während der das Rotorblatt den Bereich des Turmes zumindest teilweise überstreicht und während der das Rotorblatt den Turm bei zu starker Biegung berühren könnte.

In einer besonders bevorzugten Ausführungsform wird bei einem Ist-Wert der Messgröße zur Bestimmung der Rotorblattbiegung, der kleiner oder gleich einem vorgegebenen Minimalwert ist, die weitere Rotation der Rotorblätter insbesondere unmittelbar unterbunden, vorzugsweise durch Abbremsen des Rotors und/oder Abschalten bzw. Stillsetzen der Windenergieanlage. Wenn demnach die Messgröße einen derart kritischen Wert annimmt bzw. unterschreitet, bei dem in kürzester Zeit eine Kollision des Rotorblattes mit dem Turm zu befürchten ist, kann jedwede weitere Rotation unterbunden werden.

Wie der Fachmann des Standes der Technik erkennt, gibt es verschiedene Messgrößen, die ein Maß für die Biegung des Rotorblattes in Turmrichtung sein können. Beispielsweise könnten Krümmungssensoren an den Rotorblättern vorgesehen sein, die jeweils bestimmte Krümmungsparameter derselben messen. In einer besonders bevorzugten Ausführungsform der vorliegenden Erfindung wird im Betrieb der Windanlage allerdings während mehrerer Turmdurchgänge zumindest eines ausgewählten, den Turmbereich mit Abstand überstreichenden Rotorblattes, der räumliche Abstand zwischen dem Rotorblatt und dem Turm an einer vorbestimmten Stelle im Bereich des Turmdurchganges mittels einer Abstandsmesseinrichtung gemessen, wobei abhängig von dem gemessenen Abstand der oben erwähnte Betriebsparameter der Windenergieanlage eingestellt wird.

Der Abstand zwischen Rotorblatt und Turm während des Turmdurchganges ist ein besonders gutes Maß für die Durchbiegung des Rotorblattes auf Grund gegebener Windlast. Der Abstand kann dabei in verschiedenen Bereichen des ausgewählten Rotorblattes mittels verschiedenster Messeinrichtungen gemessen werden. In einer besonderen Ausführungsform wird der Abstand zwischen dem Rotorblatt und dem Turm an der Stelle gemessen, an der das Rotorblatt und der Turm in Horizontalrichtung die geringste Distanz aufweisen. Vorzugsweise wird der Abstand zwischen dem Rotorblatt und dem Turm im Bereich der Rotorblattspitze gemessen. Die Rotorblattspitze erfährt üblicherweise die stärkste Biegung auf Grund starker Windlast und wird deshalb als erstes mit dem Turm kollidieren. Eine Messung des Abstandes dieser Spitze zum Turm ermöglicht daher besonders unmittelbare Informationen darüber, ob Kollisionen drohen. Wenn die Windenergieanlage mehrere Rotorblätter aufweist, wird vorzugsweise der jeweilige Abstand jedes Rotorblattes gemessen.

Die Messgröße, die ein Maß für die Biegung des Rotorblattes in Turmrichtung darstellt, beispielsweise der vorgenannte Abstand zwischen Rotorblatt und Turm, kann auf verschiedenste Weise gemessen werden. Zweckmäßigerweise erfolgt diese Messung kontinuierlich während der gesamten Betriebsdauer der Anlage, d.h. immer dann, wenn der Rotor sich dreht. Sie kann aber auch diskontinuierlich in vorbestimmten Zeitabständen vorgenommen werden. Dabei kann der zeitliche Verlauf der Messgröße bestimmt, festgehalten und ausgewertet werden. Es sind eine Vielzahl von Steuerungs-/Regelungsverfahren denkbar, mittels derer abhängig von der Messgröße zur Bestimmung der Rotorblattbiegung die Windenergieanlage betrieben wird.

Was die Messeinrichtung betrifft, so kann sie unmittelbar an dem Turm und/oder an dem Rotor, insbesondere den Rotorblättern der Windenergieanlage angeordnet sein. Sie kann aber auch mittelbar Teil der Windenergieanlage sein, wenn diese beispielsweise bodennah vor der Windenergieanlage angeordnet und mit dieser über Datenleitungen verbunden ist. Hier sind vielfältige Anordnungen denkbar.

Eine Windenergieanlage, die zur Durchführung des oben beschriebenen Betriebsverfahrens geeignet ist, weist die Merkmale des Patentanspruchs 9 auf. Danach verfügt sie über eine Regelungs- und/oder Steuerungseinrichtung, mittels derer abhängig von der Messgröße zur Bestimmung der Biegung des Rotorblattes in Turmrichtung die geeigneten Maßnahmen vorgenommen werden können, wie etwa die Einstellung der Windanstellwinkel des Rotorblattes.

Falls die Messgröße zur Bestimmung der Biegung des Rotorblattes der Abstand zwischen Rotorblatt und Turm während eines Turmdurchganges ist, weist die Windenergieanlage erfindungsgemäß eine Abstandsmesseinrichtung auf. Die Abstandsmesseinrichtung kann beispielsweise als laseroptisches, als kapazitives oder als induktives Abstandsmesssystem ausgebildet sein. Verschiedene andere Messsysteme sind denkbar. Vorzugsweise ist die Abstandsmesseinrichtung derart angeordnet, dass der Abstand zwischen dem Rotorblatt und dem Turm an der Stelle messbar ist, an der das Rotorblatt und der Turm in Horizontalrichtung die geringste Distanz aufweisen. Da es grundsätzlich ausreicht, den zeitlichen Verlauf eines bestimmten, vorgegebenen Abstandes des Rotorblattes von dem Turm festzuhalten bzw. zu messen, sind natürlich auch andere Messrichtungen als die Horizontalrichtung denkbar.

Weitere Merkmale der vorliegenden Erfindung sind in den beiliegenden Patentansprüchen offenbart, in der nachfolgenden Beschreibung eines bevorzugten Ausführungsbeispieles sowie in der beigefügten Zeichnung.

Darin zeigt:

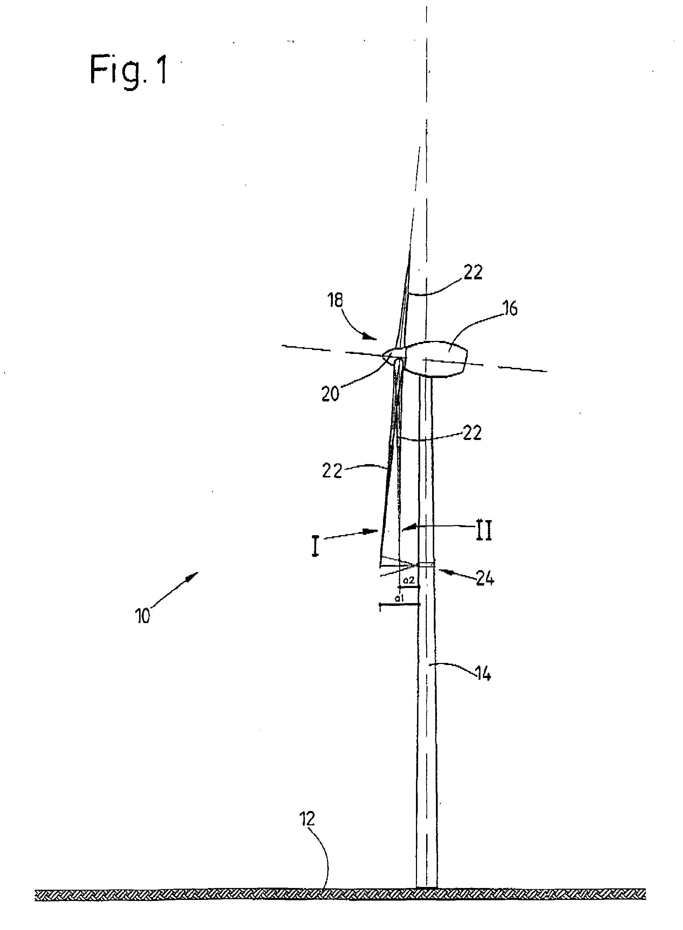

- Fig. 1: eine Seitenansicht einer Windenergieanlage, die entsprechend dem erfindungsgemäßen Verfahren betrieben wird.

in der Fig. 1 ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms einer Windenergieanlage vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzeln der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Rotorblätter 22 überstreichen dabei eine Kreisfläche. Über eine nicht dargestellte, allerdings den Fachleuten des Standes der Technik bekannte Verstelleinrichtung können die Rotorblätter 22 einzeln in ihrer Stellung zum Wind verändert werden, d.h., der Anstellwinkel der Rotorblätter 22 zum Wind ist einstellbar.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

Wie in der Zeichnung zu erkennen ist, befindet sich ein nach unten gerichtetes Rotorblatt 22 in einem sogenannten Turmdurchgang, d.h. das Rotorblatt überstreicht in dem in der Zeichnung festgehaltenen Moment den Turm 14. Bezogen auf eine nicht dargestellte Vorderansicht der Windenergieanlage 10 überdeckt dieses Rotorblatt 22 zumindest teilweise den oberen Bereich des Turmes 14. Während des Turmdurchgangs zeigt das nach unten gerichtete Rotorblatt 22 zunächst schräg, dann senkrecht und schließlich wieder schräg nach unten.

In der Zeichnung ist das nach unten gerichtete Rotorblatt 22 in den beiden Stellungen I und II dargestellt. Die Stellung I zeigt das Rotorblatt dabei in dem Moment, in dem eine vergleichsweise geringe Windlast wirkt. In der Stellung II wirkt dagegen eine höhere Windlast, wodurch das nach unten gerichtete Rotorblatt 22 in Richtung auf den Turm 14 gebogen wird. Diese Stellung II entspricht demnach einem Zeitpunkt, zu dem die Windenergieanlage 10 deutlich höheren Windgeschwindigkeiten ausgesetzt ist als in der Stellung I.

Wie deutlich zu erkennen ist, verringert sich durch diese Biegung des nach unten gerichteten Rotorblattes 22 in Richtung auf den Turm 14 der Abstand der Rotorblattspitze von der Stellung I zu der Stellung II. Der Abstand in der Stellung I entspricht dem Bezugszeichen a1, der Abstand in der Stellung II entspricht dem Bezugszeichen a2.

Bei noch stärker anwachsender Windlast könnte es zu noch größeren Biegungen der Rotorblätter 22 auf den Turm 14 kommen, im schlimmsten Falle sogar zu Turmberührungen der Rotorbiattspitzen während der jeweiligen Turmdurchgänge. Um dies wirksam zu verhindern ist eine Abstandsmesseinrichtung mit Abstandssensor 24 vorgesehen. Der Abstandssensor 24 ist an der oberen Hälfte des Turmes 14 der Windenergieanlage 10 angeordnet. Es handelt sich um ein optisches Messsystem mit Strahlungsquelle. Die Strahlungsquelle strahlt das von ihr ausgehende Licht in Horizontalrichtung nach vorne ab, d.h. zu der windzugewandten Seite der Windenergieanlage 10. Die Strahlungsquelle ist derart angeordnet, dass bei einem Turmdurchgang eines Rotorblattes 22 das Licht der Strahlungsquelle auf die windabgewandte Seite des jeweiligen Rotorblattes 22 trifft und von dort reflektiert wird. Das reflektierte Licht kann mittels eines nicht explizit erkennbaren Lichtempfängers empfangen werden, der annähernd an derselben Position angeordnet ist wie die Lichtquelle der Abstandsmesseinrichtung. Aus dem reflektierten Licht kann der Abstand a des jeweils den Turmdurchgang vollziehenden Rotorblattes 22, nämlich der Rotorblattspitze zu der Lichtquelle 24 und damit zum Turm 14 abgeleitet werden.

Mittels der Abstandsmesseinrichtung wird während jedes Turmdurchganges der Abstand der Rotorblattspitze jedes Rotorblattes 22 von dem Turm gemessen.

Die jeweiligen Signale der Abstandsmesseinrichtung werden einer nicht dargestellten Regelungseinheit der Windenergieanlage 10 zugeführt. Abhängig von dem jeweils gemessenen Abstand der Rotorblattspitze jedes Rotorblattes 22 von dem Turm 14 werden die Windanstellwinkel der Rotorblätter 22 der Windenergieanlage 10 eingestellt. Sobald der Abstand der Rotorblattspitze von dem Turm 14 zu gering wird, werden die Rotorblätter 22 etwas aus dem Wind gedreht, so dass die Windlast, die auf den Rotorblättern 22 wirkt, verringert wird.

Sollte im Extremfall durch beispielsweise eine starke Böe ein kritischer Minimalwert des Abstandes unterschritten werden, wird sofort ein vollständiges Stillsetzen der Windenergieanlage 10 bewirkt. Dies bedeutet, dass sämtliche Rotorblätter 22 vollständig aus dem Wind gedreht werden und darüber hinaus unmittelbar eine Vollbremsung des Rotors mittels mechanischer Bremsen erfolgt. Dies soll verhindern, dass bei dem unmittelbar nächsten Turmdurchgang eines Rotorblattes 22 eine Turmberührung erfolgt.

Für die genauen Ausführungen der Steuerungs-/Regelungsprogramme gibt es vielfältige Möglichkeiten, wie der Fachmann des Standes der Technik erkennt.

### Bezugszeichenlistie:

- 10: Windenergieanlage
- 12: Untergrund
- 14: Turm
- 16: Gondel
- 18: Rotor
- 20: Nabe
- 22: Rotorblatt
- 24: Abstandssensor

## Patentansprüche

1. Verfahren zum Betreiben einer Windenergieanlage (10), wobei die Windenergieanlage (10) einen von Wind antreibbaren Rotor (18) aufweist mit zumindest einem Rotorblatt (22), einen Generator zur Umwandlung der mechanischen Energie des Rotors (18) in elektrische Energie sowie einen Turm (14), an dem der Rotor (18) angeordnet ist, **dadurch gekennzeichnet, dass** im Betrieb der Windenergieanlage (10) mittels einer geeigneten Messeinrichtung wenigstens eine Messgröße vorzugsweise mehrfach gemessen wird, die ein Maß für die Biegung des Rotorblattes (22) in Turmrichtung aufgrund einer gegebenen Windlast ist und damit ein Maß für die Kollisionsgefahr des Rotorblattes (22) mit dem Turm (14) der Windenergieanlage (10) während eines Turmdurchgangs, wobei abhängig von dieser Messgröße zur Bestimmung der Rotorblattbiegung zumindest ein Betriebsparameter der Windenergieanlage (10) eingestellt wird.

2. Verfahren gemäß Anspruch 1, **dadurch gekennzeichnet, dass** abhängig von der Messgröße zur Bestimmung der Rotorblattbiegung der oder die Windanstellwinkel eines oder mehrerer Rotorblätter (22) der Windenergieanlage (10) eingestellt werden.

3. Verfahren gemäß Anspruch 1 oder 2, **dadurch gekennzeichnet, dass** bei einem Ist-Wert der Messgröße zur Bestimmung der Rotorblattbiegung, der kleiner oder gleich einem vorgegebenen Minimalwert ist, die weitere Rotation der Rotorblätter (22) unterbunden wird, insbesondere durch Abbremsen des Rotors (18) und/oder Abschalten bzw. Stillsetzen der Windenergieanlage (10).

4. Verfahren zum Betreiben einer Windenergieanlage gemäß einem oder mehreren der vorhergehenden Ansprüche, **dadurch gekennzeichnet, dass** im Betrieb der Windenergieanlage (10) während mehrerer Turmdurchgänge zumindest eines ausgewählten, den Turmbereich mit Abstand überstreichenden Rotorblatts (22), der räumliche Abstand zwischen dem Rotorblatt (22) und dem Turm (14) an einer vorbestimmten Stelle im Bereich des Turmdurchganges mittels einer Abstandsmesseinrichtung gemessen wird und dass abhängig von dem gemessenen Abstand zumindest ein Betriebsparameter der Windenergieanlage (10) eingestellt wird.

5. Verfahren gemäß einem oder mehreren der vorhergehenden Ansprüche, zumindest gemäß Anspruch 4, **dadurch gekennzeichnet, dass** bei einem gemessenen Abstandswert, der kleiner oder gleich einem vorbestimmten Minimalabstandswert ist, die weitere Rotation der Rotorblätter (22) unterbunden wird, insbesondere durch Abbremsen des Rotors (18) und/oder Abschalten bzw. Stillsetzen der Windenergieanlage (10).

6. Verfahren gemäß einem oder mehreren der vorhergehenden Ansprüche, zumindest gemäß Anspruch 4, **dadurch gekennzeichnet, dass** zur Vergrößerung des Abstandes des Rotorblattes (22) von dem Turm (14) der Wirydenergieanlage (10) der oder die Windanstellwinkel eines oder mehrerer Rotorblätter (22) vergrößert werden.

7. Verfahren gemäß einem oder mehreren der vorhergehenden Ansprüche, zumindest gemäß Anspruch 4, **dadurch gekennzeichnet, dass** der Abstand zwischen dem Rotorblatt (22) und dem Turm (14) an der Stelle gemessen wird, an der das Rotorblatt (22) und der Turm (14) in Horizontalrichtung die geringste Distanz aufweisen.

8. Verfahren gemäß einem oder mehreren der vorhergehenden Ansprüche, zumindest gemäß Anspruch 4, **dadurch gekennzeichnet, dass** der Abstand zwischen dem Rotorblatt (22) und dem Turm (14) im Bereich der Rotorblattspitze gemessen wird.

9. Windenergieanlage (10) zur Durchführung des Verfahrens gemäß einem oder mehreren der vorhergehenden Ansprüche, wobei die Windenergieanlage (10) einen von Wind antreibbaren Rotor (18) aufweist mit zumindest einem Rotorblatt (22), einen Generator zur Umwandlung der mechanischen Energie des Rotors (18) in elektrische Energie sowie einen Turm (14), an dem der Rotor (18) angeordnet ist, **dadurch gekennzeichnet, dass** die Windenergieanlage (10) eine Messeinrichtung aufweist mittels derer im Betrieb der Windenergieanlage (10) wenigstens eine Messgröße vorzugsweise mehrfach gemessen wird, die ein Maß für die Biegung des Rotorblattes (22) in Turmrichtung aufgrund einer gegebenen Windlast ist und damit ein Maß für die Kollisionsgefahr des Rotorblattes (22) mit dem Turm (14) der Windenergieanlage (10) während eines Turmdurchgangs, und dass eine Regelungs- und/oder Steuerungseinrichtung vorgesehen ist mittels derer abhängig von dieser Messgröße zur Bestimmung der Rotorblattbiegung zumindest ein Betriebsparameter der Windenergieanlage (10) einstellbar ist.

10. Windenergieanlage gemäß Anspruch 9, **dadurch gekennzeichnet, dass** mittels einer Abstandsmesseinrichtung im Betrieb der Windenergieanlage (10) der räumliche Abstand zwischen dem Rotorblatt (22) und dem Turm (14) an einer vorbestimmten Stelle während mehrerer Turmdurchgänge zumindest eines ausgewählten, den Turmbereich mit Abstand überstreichenden Rotorblatts (22), im Bereich des Turmdurchganges messbar ist und dass eine Regelungs- und/oder Steuerungseinrichtung vorgesehen ist, mittels derer abhängig von dem gemessenen Abstand zumindest ein Betriebsparameter der Windenergieanlage (10) einstellbar ist.

11. Windenergieanlage gemäß Anspruch 10, **dadurch gekennzeichnet, dass** die Abstandsmesseinrichtung als laseroptisches, kapazitives, induktives Abstandsmesssystem oder dergleichen ausgebildet ist.

12. Windenergieanlage gemäß Anspruch 10 oder 11, **dadurch gekennzeichnet, dass** die Abstandsmesseinrichtung derart angeordnet ist, dass der Abstand zwischen dem Rotorblatt (22) und dem Turm (14) an der Stelle messbar ist, an der das Rotorblatt (22) und der Turm (14) in Horizontalrichtung die geringste Distanz aufweisen.
